(19) Europäisches Patentamt / European Patent Office / Office européen des brevets

(11) **EP 2 917 798 B1**

(12) **EUROPEAN PATENT SPECIFICATION**

(45) Date of publication and mention of the grant of the patent:
**08.02.2017 Bulletin 2017/06**

(21) Application number: **13727815.6**

(22) Date of filing: **21.05.2013**

(51) Int Cl.:
*G05B 23/02* (2006.01)　　*G05B 17/02* (2006.01)

(86) International application number:
**PCT/EP2013/060406**

(87) International publication number:
**WO 2014/072085 (15.05.2014 Gazette 2014/20)**

(54) **A METHOD FOR MODELING AND MONITORING FOULING**

VERFAHREN ZUR MODELLIERUNG UND ÜBERWACHUNG EINER FAULUNG

PROCÉDÉ DE MODÉLISATION ET DE CONTRÔLE DE L'ENCRASSEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.11.2012 TR 201213028**

(43) Date of publication of application:
**16.09.2015 Bulletin 2015/38**

(73) Proprietor: **Turkiye Petrol Rafinerileri Anonim Sirketi Tupras Kocaeli 41780 (TR)**

(72) Inventors:
- **ORMAN, Sultan**
  **41790 Kocaeli (TR)**
- **BAS, Serife**
  **41790 Kocaeli (TR)**
- **ERDENER AKINC, Hulya**
  **Korfez, 41780, Kocaeli (TR)**
- **SAHIN, Gulsen**
  **Korfez, 41780, Kocaeli (TR)**
- **BECER, Metin**
  **35800 Izmir (TR)**
- **BAKIR, Mustafa**
  **41790 Kocaeli (TR)**
- **AYHAN, Umut Baris**
  **Korfez, 41780, Kocaeli (TR)**
- **BALKAN, Firuz**
  **35100 Izmir (TR)**
- **OZCELIK, Yavuz**
  **35100 Izmir (TR)**

(74) Representative: **Cayli, Hülya**
**Paragon Consultancy Inc.**
**Koza Sokak No: 63/2**
**GOP**
**06540 Ankara (TR)**

(56) References cited:
**CA-A1- 2 344 908　　US-A1- 2005 133 211**

EP 2 917 798 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of Invention**

The present invention relates to a method for modeling and monitoring the amount of fouling in a heat exchanger.

**Prior Art**

Plants such as petroleum refineries make use of heat exchangers for providing heat transfer between the fluids used therein. Heat exchangers are typically structured to provide heat exchange between the fluids without involving any physical contact therebetween. According to the field of use and other requirements, heat exchangers with different structures are used. One of these is a "shell and tube type" heat exchanger comprising a plurality of tubes in a shell. In tubular heat exchangers, a fluid is passed through the tubes disposed in the shell and another fluid trough the shell, thereby providing heat exchange between these fluids.

Heat exchangers may foul up in time due to the fluids passing there through. Fouling, in turn, leads to a slowdown in the heat exchange between the fluids, namely it reduces the efficiency of the heat exchanger. For this reason, it is necessary to measure the amount of fouling (or the amount of heat exchange) in the heat exchanger in certain time intervals to keep the heat exchanger running at high efficiency. This measuring operation, however, cannot be conducted physically while the heat exchanger is operating. Therefore, various methods have been proposed and used for modeling the amount of heat exchange in heat exchangers according to the prior art. In these methods, data on the physical properties of the respective heat exchanger, data on the temperature and on the flow rate of the respective fluids, environmental factors, and many other parameters are used such that the amount of heat exchange is modeled using some complex formulas or equations.

In the patent document WO2008094757A1 according to the prior art is disclosed a method for measuring the amount of fouling in a heat exchanger. According to that method, the temperature of fluids which enter and leave the heat exchanger is measured at different times. Measured values are evaluated statistically (e.g. mean, standard deviation, etc.) and the amount of fouling in the heat exchanger is calculated accordingly. That method, however, is time taking and laborious since it requires many measurements for providing a correct fouling calculation.

CA 2344908 describes a method for diagnosis of HVAC subsystems.

**Brief Description of Invention**

A method is developed according to the present invention for modeling and monitoring the amount of fouling in a heat exchanger comprising at least one shell and at least one tube disposed in the shell to provide heat exchange between the fluids of different temperatures passed through said shell and tube, respectively. Said method comprises the steps of assigning an inlet and outlet temperature difference for each of the fluids passed through the tube and shell; calculating an iterative outlet temperature for each fluid using the assigned temperature differences and the measured inlet temperatures of the fluids; determining an expected outlet temperature for each fluid so as to equate it to the calculated iterative outlet temperature; calculating a mean temperature value for each fluid; calculating an iterative clean heat transfer coefficient for the heat exchanger using the physical properties under the calculated mean temperatures of the tube and shell; calculating a logarithmic mean temperature difference using the inlet temperatures and iterative outlet temperatures of the fluids; updating the iterative outlet temperatures for each fluid by solving some energy equations of the tube, the shell and of the heat exchanger using the calculated iterative clean heat transfer coefficient, the calculated logarithmic mean temperature difference, the physical parameters of the heat exchanger, the physical parameters of the tube and the shell, and the inlet temperatures of the fluids; comparing the updated iterative outlet temperatures to the expected outlet temperatures; returning to the step of determining an expected outlet temperature for each fluid if the difference between the updated iterative outlet temperature and the expected outlet temperature for at least one of the fluids is above a predefined value; calculating instantaneous values for the heat exchanger using the updated iterative outlet temperatures if the difference between the updated iterative outlet temperature and the expected outlet temperature for each fluid is below said predefined threshold value; and calculating the amount of fouling in the heat exchanger using the calculated instantaneous values and the calculated iterative clean heat transfer coefficient.

By virtue of the method according to the present invention, the outlet temperatures of the fluids used in a heat exchanger are calculated iteratively. Thus, a fouling coefficient is calculated in a rapid and reliable manner for the heat exchanger using instantaneous outlet temperatures determined in the same manner. Additionally, a time-dependent fouling behavior can be monitored for the heat exchanger by repeating said method in certain time intervals and comparing the calculated fouling values of the heat exchanger.

## Object of Invention

The object of the present invention is to develop a method for modeling the amount of fouling in a heat exchanger.

Another object of the present invention is to develop a method, by which the amount of fouling in the heat exchanger is modeled in a simple manner.

A further object of the present invention is to develop a method for real-time monitoring the heat exchanger in terms of fouling.

Still a further object of the present invention is to develop a method for monitoring the time-dependent fouling behavior of the heat exchanger.

## Description of Figures

Illustrative embodiments of a method for modeling and monitoring the amount of fouling in a heat exchanger according to the present invention are illustrated in the accompanying figures briefly described hereunder.

Figure 1 is a perspective section view of a heat exchanger to which the method according to the present invention is applied.

Figure 2 is a flowchart of the method according to the present invention.

The components in said figures are individually referenced as following:

| | |
|---|---|
| Shell | (S) |
| Tube | (T) |
| Assigning a temperature difference | (100) |
| Calculating an iterative outlet temperature | (101) |
| Determining an expected outlet temperature | (102) |
| Finding mean fluid temperatures | (103) |
| Calculating an iterative clean heat transfer coefficient | (104) |
| Calculating a logarithmic mean temperature difference | (105) |
| Updating the iterative outlet temperature | (106) |
| Comparing the iterative temperature to the expected temperature | (107) |
| Finding instantaneous values | (108) |
| Calculating the amount of fouling in the heat exchanger | (109) |

## Description of Invention

Plants such as petroleum refineries, where fluids at different temperatures are used, give place to heat exchangers for providing heat transfer between the fluids. Heat exchangers provide for the heat exchange between the fluids without involving any physical contact therebetween. However, heat exchangers can foul up in time due to the fluids and foreign matters possibly contained in the fluids. This fouling reduces the running efficiency of the heat exchanger. For this reason, a method is developed according to the present invention for modeling the amount of fouling in a heat exchanger.

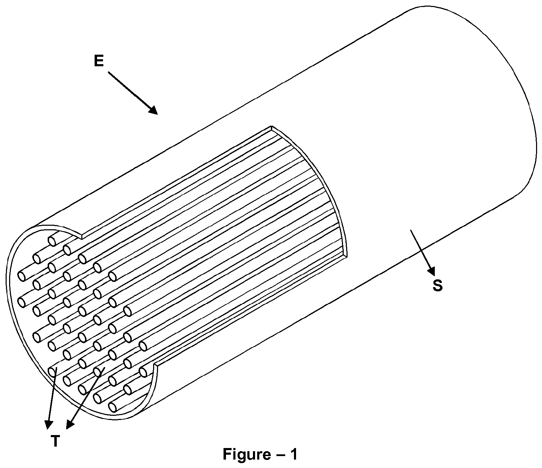

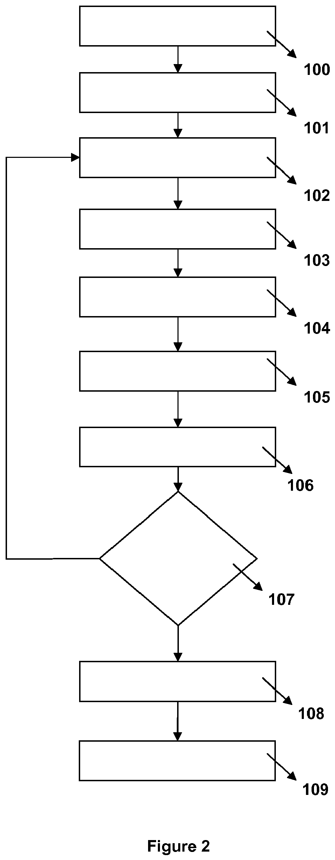

The method developed according to the present invention is used for modeling the amount of fouling in a heat exchanger (E) (also known as shell and tube type heat exchanger in the art), as illustrated in Figure 1, comprising a shell (S) having a hollow tubular structure and at least one tube (T) disposed in said shell (S) to provide heat exchange between the fluids at different temperatures passed through said shell (S) and tube (T), respectively. Said method, of which a flowchart is given in Figure 2, comprises the steps of assigning an inlet and outlet temperature difference for each of the fluids passed through the tube (T) and the shell (S) (100); calculating an iterative outlet temperature for each fluid using the assigned temperature differences and the measured inlet temperatures of the fluids (101); determining an expected outlet temperature for each fluid so as to equate it to the calculated iterative outlet temperature (102); calculating a mean temperature value for each fluid (103); calculating an iterative clean heat transfer coefficient for the heat exchanger (E) using the physical properties under the calculated mean temperatures of the tube (T) and the shell (S) (104); calculating a logarithmic mean temperature difference using the inlet temperatures and iterative outlet temperatures of the fluids (105); updating the iterative outlet temperatures for each fluid by solving some energy equations of the tube (T), the shell (S) and of the heat exchanger (E) using the calculated iterative clean heat transfer coefficient, the calculated logarithmic mean temperature difference, the physical parameters of the heat exchanger (E), the physical parameters of the tube (T) and the shell (S), and the inlet temperatures of the fluids (106); comparing the updated iterative outlet temperatures to the expected outlet temperatures (107); returning to the step of determining an expected outlet temperature for each fluid (102) if the difference between the updated iterative outlet temperature and the expected outlet temperature for at least one of the fluids is above a predefined value; calculating instantaneous values for the heat exchanger (E) using the updated iterative outlet temperatures if the difference between the updated iterative outlet temperature and the expected outlet temperature for each fluid is below said predefined threshold value (108); and calculating the amount of fouling in the heat exchanger (E) using the calculated instantaneous values and the calculated iterative clean heat transfer coefficient (109). Since the outlet temperatures of the tube (T) and the shell (S) are calculated by an iterative method according to the present invention, the amount of fouling of the heat exchanger (E) can be determined in a rapid and reliable manner.

In a representative embodiment of the method according to the present invention, the values assigned to the cold fluid and the hot fluid (which are cold or hot relative to each other) in the step of assigning a temperature difference (100) are represented by "delt1" and "delt2", respectively. Then, in the step of calculating the iterative outlet temperatures (101), these values are calculated using the following equations [1] for the hot fluid and cold fluid, respectively.

$$T_{t-o1} = T_{t-i} + delt1 \qquad (1)$$

$$T_{s-o1} = T_{s-i} - delt2$$

Here, the term "$T_{t-o1}$" is the iterative outlet temperature of the fluid passed through the tube side, "$T_{t-i}$" is the inlet temperature of the fluid passed through the tube side, "$T_{s-o1}$" is the iterative outlet temperature of the fluid passed through the shell side, and "$T_{s-i}$" is the inlet temperature of the fluid passed through the shell side. In the step of determining the expected outlet temperatures (102), these values of the fluids are equated to the calculated iterative outlet temperatures, respectively, as indicated in the following equations [2].

$$T_{t-oold} = T_{t-o1} \qquad (2)$$

$$T_{s-oold} = T_{so-1}$$

Here the term "$T_{t-oold}$" is the expected outlet temperature of the fluid passed through the tube side and "$T_{s-oold}$" is the expected outlet temperature of the fluid passed through the shell side. In the step of finding the mean fluid temperatures (103), these values are calculated by finding the average of the inlet temperatures and the iterative outlet temperatures, respectively, as indicated in the following equations [3].

$$T_{ave-t} = \frac{T_{t-o1} + T_{t-i}}{2} \qquad (3)$$

$$T_{ave-s} = \frac{T_{s-o1} + T_{s-i}}{2}$$

Here the term "$T_{ave-t}$" is the average temperature of the fluid passed through the tube side and "$T_{ave-s}$" is the average temperature of the fluid passed through the shell side. After the average temperature values are found, the iterative clean heat transfer coefficient of the heat exchanger (E) is calculated (104) in the following equation [4] by using the physical properties at the average temperature values of the tube (T) and the shell (S) at these temperatures (e.g. if hot fluid is passed through the shell (S), the physical properties of the shell (S) at the average temperature of the hot fluid).

$$U_{est} = \left[ \frac{OD_t}{ID_t \times h_i} + \frac{OD_t \times \ln\left(OD_t / ID_t\right)}{2 \times k_{tube}} + \frac{1}{h_o} \right]^{-1} \qquad (4)$$

Here the term "$U_{est}$" is the iterative clean heat transfer coefficient of the heat exchanger (E), "$OD_t$" is the outer diameter of the tube (T), "$ID_t$" is the inner diameter of the tube (T), "$h_i$" is the heat transfer coefficient of the tube (T),

"$k_{tube}$" is the thermal conductivity of the tube (T), and the term "$h_o$" is the heat transfer coefficient of the shell (S). The thermal conductivity ($k_{tube}$) of the tube (T) is a value which depends on the material from which the tube (T) is produced and can be found in the literature.

In calculating the heat transfer coefficient of the tube (T), the following equations ([5] and [6]) of Seider-Tate proposed in 1936 are used. These are as follows, for fluids with high viscosity (Re<2100):

$$h_i = 1.86 \times \frac{k}{D_i} \times \left( \frac{D_i \times G_i}{\mu} \right)^{0.33} \times \left( \frac{C_p \times \mu}{k} \right)^{0.33} \times \left( \frac{\mu}{\mu_s} \right)^{0.14} \qquad (5)$$

and for the turbulent flow remaining above the transition region (Re> 10,000; 0.7<Pr<160 ve L/Di>10):

$$h_i = 0.023 \times \frac{k}{D_i} \times \left( \frac{D_i \times G_i}{\mu} \right)^{0.8} \times \left( \frac{C_p \times \mu}{k} \right)^{0.33} \times \left( \frac{\mu}{\mu_s} \right)^{0.14} \qquad (6).$$

As for the calculation of the heat transfer coefficient of the shell (S), the following sequence is used.

$$j_H = 0.5 \times \left( 1 + \frac{B}{ID_s} \right) \times \left( 0.08 \times Re_s^{0.6821} + 0.7 \times Re_s^{0.1772} \right) \qquad (7)$$

Here, the shell's (S) equivalent diameter and the mass velocity are used in calculating the Re number for the shell (S).

$$Re_s = \frac{D_e \times G}{\mu_s} \qquad G = \frac{\dot{m}}{A_s} \qquad A_s = \frac{ID_s^2 \times C' \times \left( B / ID_s \right)}{P_T} \qquad (8)$$

The clearance factor (C') and the equivalent diameter ($D_e$) vary depending on the outer tube diameter ($OD_t$) of the heat exchanger, the layout configuration of tubes, and the pitch size ($P_T$).

Here, the Nu number and the heat transfer coefficient for the shell (S) are calculated using the following equations (9).

$$Nu_s = j_H \times Pr_s^{1/3} \times \left( \mu / \mu_w \right)^{0.14} \qquad (9)$$

$$Pr_s = \frac{cp_s \times \mu_s}{k_s}$$

$$Nu_s = \frac{h_o \times D_e}{k_s}$$

$$h_o = \frac{Nu_s \times k_s}{D_e}$$

Then, the logarithmic mean temperature difference is calculated (105) using the inlet temperatures and the iterative outlet temperatures of the fluids as illustrated in the following equation [10].

$$LMTD = \frac{\left[\left(T_{s-i} - T_{t-o1}\right) - \left(T_{s-o1} - T_{t-i}\right)\right]}{\ln\left(\dfrac{T_{s-i} - T_{t-o1}}{T_{s-o1} - T_{t-i}}\right)} \qquad (10)$$

Here "LMTD" is the logarithmic mean temperature difference. Then, the following energy equations [11] are formulated for the tube (T), the shell (S), and the heat exchanger (E).

$$Q = \dot{m}_t \times cp_t \times \left(T_{t-o1} - T_{t-i}\right) \quad (11)$$

$$Q = m_s \times cp_s \times \left(T_{s-o1} - T_{s-i}\right)$$

$$Q = F \times U_{EST} \times A \times LMTD$$

Here the term "Q" is the transferred heat , $"\dot{m}_t"$ is the mass flow rate of the fluid passed through the tube side, "$cp_t$" is the specific heat of the fluid passed through the tube side, "$m_s$" is the mass of the fluid passed through the shell side, "$cp_s$" is the specific heat of the fluid passed through the shell side, F is the correction factor in calculating the logarithmic temperature difference, and "A" is the surface area of the heat exchanger. As a result of interpreting any two of the energy equations above, the iterative outlet temperatures of the hot and cold fluids, respectively, can be updated, e.g. as indicated in the following equations [11] (106).

$$m_t \times cp_t \times \left(T_{t-o1} - T_{t-i}\right) = m_s \times cp_s \times \left(T_{s-o1} - T_{s-i}\right) \qquad (11)$$

$$m_t \times cp_t \times \left(T_{t-o1} - T_{t-i}\right) = F \times U_{EST} \times A \times LMTD$$

Then, the updated iterative outlet temperatures and the expected outlet temperatures calculated previously are compared as indicated below in [12] (107), and it is determined if the iterative outlet temperatures are calculated correctly with an acceptable error margin.

$$abs\left(T_{s-o1} - T_{s-oold}\right) \rangle TH_1 \qquad (12)$$

$$abs\left(T_{t-o1} - T_{t-oold}\right) \rangle TH_2$$

Here, the terms "$TH_1$" and "$TH_2$" are predefined threshold values, respectively. If one of the statements above is fulfilled, it is returned to the step of determining the expected outlet temperature (102) based on that the calculated iterative outlet temperature is not calculated with an acceptable error margin. If neither of these statements is fulfilled, it is assumed that the calculated iterative outlet temperature is correct with an acceptable error margin, namely that the calculated iterative outlet temperature represents the instantaneous (operational) outlet temperatures of the fluids. Once the instantaneous outlet temperatures are determined, the clean heat transfer coefficient of the heat exchanger (E), the instantaneous logarithmic mean temperature difference and a fouling heat transfer coefficient are calculated using the following equations [13].

$$U_C = U_{est} \qquad (13)$$

$$LMTD_{op} = \frac{\left[\left(T_{s-i} - T_{t-op}\right) - \left(T_{s-op} - T_{t-i}\right)\right]}{\ln\left(\dfrac{T_{s-i} - T_{t-op}}{T_{s-op} - T_{t-i}}\right)}$$

$$Q = \dot{m}_t \times cp_t \times \left(T_{t-op} - T_{t-i}\right) = U_d \times A \times LMTD_{op}$$

Here the term "$U_c$" is the heat transfer coefficient of the heat exchanger (E) under clean conditions, "$LMTD_{op}$" is the instantaneous logarithmic mean temperature difference of the heat exchanger (E), "$T_{t-op}$" is the instantaneous outlet temperature of the fluid passed through the tube side, "$T_{s-op}$" is the instantaneous outlet temperature of the fluid passed through the shell side, "$\dot{m}_t$" is the mass velocity of the fluid passed through the tube side, and "$U_d$" is the heat transfer coefficient of the heat exchanger (E) under fouling conditions. Finally, the amount of fouling of the heat exchanger (E) can be calculated instantaneously (109) using the following equation [14].

$$R_f = \frac{1}{U_C} - \frac{1}{U_d} \qquad (14)$$

Here, the term "$R_f$" represents the fouling coefficient of the heat exchanger.

In a preferred embodiment according to the present invention, the fouling coefficient of the heat exchanger (E) is calculated in certain time intervals. As a result of comparing these calculated values, a time-dependent fouling behavior can be monitored for the heat exchanger (E).

According to another preferred embodiment of the present invention, in the step of assigning inlet and outlet temperate differences for the fluids (100), the temperature differences are assigned as a constant value (e.g. 10°C). When the constant value is selected as a reasonable value for the heat exchanger, the iteration number of the method can be kept below a certain number even if a fouling calculation is made for different fluids at different temperatures in the heat exchanger (E). Thus, the method can provide rapid and reliable results.

According to an alternative embodiment of the present invention, the temperature differences in the step of assigning inlet and outlet temperature differences to the fluids (100) is made equal to a certain proportion (e.g. 25%) of the temperature difference between the hot fluid and the cold fluid. Thus, it becomes also possible to further reduce the iteration number of the method and the method can provide faster results.

In another preferred embodiment according to the present invention, said threshold values are determined in the form of constant values (e.g. 0,1°C). Thus, the method can be operated very accurately.

By virtue of the method according to the present invention, the outlet temperatures of the fluids used in the heat exchanger (E) are calculated iteratively. Thus, the fouling coefficient is calculated in a rapid and reliable manner for the heat exchanger using instantaneous outlet temperatures obtained in the same manner. Additionally, the time-dependent fouling behavior can be monitored for the heat exchanger (E) by iterating said method in certain time intervals and comparing the calculated fouling values of the heat exchanger (E).

**Claims**

1. A method for modeling the amount of fouling in a heat exchanger (E) comprising at least one shell (S) and at least one tube (T) disposed in said shell (S) to provide heat exchange between the fluids at different temperatures passed through said shell (S) and tube (T), respectively, **characterized by** comprising the steps of

   - assigning an inlet and outlet temperature difference for each of the fluids passed through the tube (T) and the shell (S) (100);
   - calculating an iterative outlet temperature for each fluid using the assigned temperature differences and the measured inlet temperatures of the fluids (101);
   - determining an expected outlet temperature for each fluid so as to equate it to the calculated iterative outlet temperature (102);
   - calculating a mean temperature value for each fluid (103);
   - calculating an iterative clean heat transfer coefficient for the heat exchanger (E) using the physical properties under the calculated mean temperatures of the tube (T) and the shell (S) (104);
   - calculating a logarithmic mean temperature difference using the inlet temperatures and iterative outlet temperatures of the fluids (105);
   - updating the iterative outlet temperatures for each fluid by solving some energy equations of the tube (T), the shell (S) and of the heat exchanger (E) using the calculated iterative clean heat transfer coefficient, the calculated logarithmic mean temperature difference, the physical parameters of the heat exchanger (E), the physical parameters of the tube (T) and the shell (S), and the inlet temperatures of the fluids (106);
   - comparing the updated iterative outlet temperatures to the expected outlet temperatures (107);
   - returning to the step of determining an expected outlet temperature for each fluid (102) if the difference between the updated iterative outlet temperature and the expected outlet temperature for at least one of the fluids is above a predefined value;

- calculating instantaneous values for the heat exchanger (E) using the updated iterative outlet temperatures if the difference between the updated iterative outlet temperature and the expected outlet temperature for each fluid is below said predefined threshold value (108); and

- calculating the amount of fouling in the heat exchanger (E) using the calculated instantaneous values and the calculated iterative clean heat transfer coefficient (109).

2. The method according to Claim 1, **characterized in that** the iterative outlet temperatures of the fluids are calculated in the step of calculating the iterative outlet temperature (101) according to the following equations,

$$T_{t-o1} = T_{t-i} + delt1$$

$$T_{s-o1} = T_{s-i} - delt2$$

wherein the term "delt1" represents the temperature difference assigned to the fluid passed through the tube side, "delt2" represents the temperature difference assigned to the fluid passed through the shell side, the term "$T_{t-o1}$" represents the iterative outlet temperature of the fluid passed through the tube side, "$T_{t-i}$" represents the inlet temperature of the fluid passed through the tube side, "$T_{s-o1}$" represents the iterative outlet temperature of the fluid passed through the shell side, and "$T_{s-i}$" represents the inlet temperature of the fluid passed through the shell side.

3. The method according to Claim 2, **characterized in that** the expected outlet temperatures of the fluids are calculated in the step of determining the expected outlet temperature (102) according to the following equations,

$$T_{t-oold} = T_{t-o1}$$

$$T_{s-oold} = T_{so-1}$$

wherein the term "$T_{t-oold}$" represents the expected outlet temperature of the fluid passed through the tube side and "$T_{s-oold}$" represents the expected outlet temperature of the fluid passed through the shell side.

4. The method according to Claim 3, **characterized in that** the average temperatures of the fluids are calculated in the step of finding the average fluid temperatures (103) according to the following equations,

$$T_{ave-t} = \frac{T_{t-o1} + T_{t-i}}{2}$$

$$T_{ave-s} = \frac{T_{s-o1} + T_{s-i}}{2}$$

wherein the term "$T_{ave-t}$" represents the average temperature of the fluid passed through the tube side and "$T_{ave-s}$" represents the average temperature of the fluid passed through the shell side.

5. The method according to Claim 4, **characterized in that** the iterative clean heat transfer coefficient of the heat exchanger (E) is calculated in the step of calculating the iterative clean heat transfer coefficient of the heat exchanger (E) (104) according to the following equation,

$$U_{est} = \left[ \frac{OD_t}{ID_t \times h_i} + \frac{OD_t \times \ln\left( OD_t / ID_t \right)}{2 \times k_{tube}} + \frac{1}{h_o} \right]^{-1}$$

wherein the term "$U_{est}$" represents the iterative clean heat transfer coefficient of the heat exchanger (E), "$OD_t$" represents the outer diameter of the tube (T), "$ID_t$" represents the inner diameter of the tube (T), "$h_i$" represents the heat transfer coefficient of the tube (T), "$k_{tube}$" represents the thermal conductivity of the tube (T), and the term "$h_o$" represents the heat transfer coefficient of the shell (S).

6. The method according to Claim 3 or 5, **characterized in that** the logarithmic mean temperature difference is calculated in the step of calculating the logarithmic mean temperature difference (105) according to the following equation,

$$LMTD = \frac{\left[ \left( T_{s-i} - T_{t-o1} \right) - \left( T_{s-o1} - T_{t-i} \right) \right]}{\ln \left( \dfrac{T_{s-i} - T_{t-o1}}{T_{s-o1} - T_{t-i}} \right)}$$

wherein the term "LMTD" represents the logarithmic mean temperature difference.

7. The method according to Claim 6, **characterized in that** the iterative outlet temperatures of the fluids are calculated in the step of updating the iterative outlet temperature (106) according to the following equations,

$$Q = \dot{m}_t \times cp_t \times \left( T_{t-o1} - T_{t-i} \right)$$

$$Q = m_s \times cp_s \times \left( T_{s-o1} - T_{s-i} \right)$$

$$Q = F \times U_{EST} \times A \times LMTD$$

wherein the term "Q" represents the transferred heat, "$m_t$" represents the mass of the fluid passed through the tube side, "$cp_t$" represents the specific heat of the fluid passed through the tube side, "$m_s$" represents the mass of the fluid passed through the shell side, "$cp_s$" represents the specific heat of the fluid passed through the shell side, F represents the correction factor in calculating the logarithmic temperature difference, and "A" is the surface area of the heat exchanger.

8. The method according to Claim 7, **characterized in that** the following statements are used in the step of comparing the updated iterative outlet temperature values to the expected outlet temperature values (107),

$$abs\left( T_{s-o1} - T_{s-oold} \right) \rangle TH_1$$

$$abs\left( T_{t-o1} - T_{t-oold} \right) \rangle TH_2$$

wherein the terms "$TH_1$" and "$TH_2$" are predefined threshold values, respectively.

9. The method according to Claim 8, **characterized in that** if at least one of said statements is fulfilled, it is returned to the step of determining an expected outlet temperature for each fluid (102).

10. The method according to Claim 8, **characterized in that** if neither of said statements are fulfilled, the instantaneous values of the heat exchanger (E) are calculated according to the following equations,

$$U_C = U_{est}$$

$$LMTD_{op} = \frac{\left[\left(T_{s-i} - T_{t-op}\right) - \left(T_{s-op} - T_{t-i}\right)\right]}{\ln\left(\dfrac{T_{s-i} - T_{t-op}}{T_{s-op} - T_{t-i}}\right)}$$

$$Q = \dot{m}_t \times cp_t \times \left(T_{t-op} - T_{t-i}\right) = U_d \times A \times LMTD_{op}$$

wherein the term "$U_c$" represents the heat transfer coefficient of the heat exchanger (E) under clean conditions, "$LMTD_{op}$" represents the instantaneous logarithmic mean temperature difference of the heat exchanger (E), "$T_{t-op}$" represents the instantaneous outlet temperature of the fluid passed through the tube side, "$T_{s-op}$" represents the instantaneous outlet temperature of the fluid passed through the shell side, "$\dot{m}_t$" represents the mass velocity of the fluid passed through the tube side, and "$U_d$" represents the heat transfer coefficient of the heat exchanger (E) under fouling conditions.

11. The method according to Claim 10, **characterized in that** the instantaneous amount of fouling of the heat exchanger (E) is calculated in the step of calculating the amount of fouling of the heat exchanger (E) (109) according to the following equation,

$$R_f = \frac{1}{U_C} - \frac{1}{U_d}$$

wherein the term "$R_f$" represents the fouling coefficient of the heat exchanger.

12. The method according to any of the preceding claims, **characterized in that** the fouling coefficient of the heat exchanger (E) is calculated in certain time intervals.

13. The method according to Claim 12, **characterized by** comprising a step of monitoring the time-dependent fouling behavior of the heat exchanger (E) by comparing the fouling coefficients of the heat exchanger (E) calculated at different times.

14. The method according to Claim 1, **characterized in that** the temperature differences are assigned as a constant value in the step of assigning inlet and outlet temperate differences for the fluids (100).

15. The method according to Claim 1, **characterized in that** the temperature differences are assigned according to the inlet temperatures of the fluids in the step of assigning inlet and outlet temperate differences for the fluids (100).

16. The method according to Claim 8, **characterized in that** said threshold values are assigned in the form of constant values.

**Patentansprüche**

1. Verfahren zur Modellierung des Ausmaßes von Verschmutzung in einem Wärmetauscher (E) mit wenigstens einem Mantel (S) und wenigstens einer in dem Mantel (S) angeordneten Röhre (T), um Wärmeaustausch zwischen den auf unterschiedlichen Temperaturen befindlichen Flüssigkeiten zu bewirken, die durch den Mantel (S) bzw. die Röhre (T) geleitet werden, **dadurch gekennzeichnet, dass** das Verfahren die Schritte aufweist

   - Zuordnen einer Differenz der Einlass- und Auslasstemperatur für jede der durch die Röhre (T) und den Mantel (S) geleiteten Flüssigkeiten (100),
   - Berechnen einer iterativen Auslasstemperatur für jede Flüssigkeit unter Verwendung der zugeordneten Temperaturdifferenzen und der gemessenen Einlasstemperaturen der Flüssigkeiten (101),
   - Bestimmten einer erwarteten Auslasstemperatur für jede Flüssigkeit, um sie der berechneten iterativen Auslasstemperatur (102) gleichzusetzen,

- Berechnen eines mittleren Temperaturwertes für jede Flüssigkeit (103),
- Berechnen eines iterativen sauberen Wärmeübergangskoeffizienten für den Wärmetauscher (E) unter Verwendung der physikalischen Eigenschaften unter den berechneten mittleren Temperaturen der Röhre (T) und des Mantels (S) (104),
- Berechnen einer logarithmischen mittleren Temperaturdifferenz unter Verwendung der Einlasstemperaturen und der iterativen Auslasstemperaturen der Flüssigkeiten (105),
- Aktualisieren der iterative Auslasstemperaturen für jede Flüssigkeit, indem einige Energiegleichungen der Röhre (T), des Mantels (S) und des Wärmetauschers (E) gelöst werden unter Verwendung des berechneten iterativen sauberen Wärmeübergangskoeffizienten, der berechneten logarithmischen mittleren Temperaturdifferenz, der physikalischen Parameter des Wärmetauschers (E), der physikalischen Parameter der Röhre (T) und des Mantels (S) und der Einlasstemperaturen der Flüssigkeiten (106),
- Vergleichen der aktualisierten iterativen Auslasstemperaturen mit den erwarteten Auslasstemperaturen (107),
- Zurückkehren zu dem Schritt der Bestimmung einer erwarteten Auslasstemperatur für jede Flüssigkeit (102), wenn die Differenz zwischen der aktualisierten iterativen Auslasstemperatur und der erwarteten Auslasstemperatur für wenigstens eine der Flüssigkeiten über einem vordefinierten Wert liegt,
- Berechnen von Momentanwerten für den Wärmetauscher (E) unter Verwendung der aktualisierten iterativen Auslasstemperaturen, wenn die Differenz zwischen der aktualisierten iterativen Auslasstemperatur und der erwarteten Auslasstemperatur für jede Flüssigkeit unter dem vordefinierten Schwellenwert liegt (108), und
- Berechnen des Ausmaßes von Verschmutzung in dem Wärmetauscher (E) unter Verwendung der berechneten Momentanwerte und des berechneten iterativen sauberen Wärmeübergangskoeffizienten (109).

2. Verfahren nach Anspruch 1, **dadurch gekennzeichnet, dass** die iterativen Auslasstemperaturen der Flüssigkeiten in dem Schritt der Berechnung der iterativen Auslasstemperatur (101) gemäß den folgenden Gleichungen berechnet werden

$$T_{t-o1} = T_{t-i} + delt1$$

$$T_{s-o1} = T_{s-i} - delt2$$

wobei der Term "delt1" die Temperaturdifferenz repräsentiert, die der Flüssigkeit zugeordnet ist, die durch die Röhrenseite geleitet wird, "delt2" die Temperaturdifferenz repräsentiert, die der Flüssigkeit zugeordnet ist, die durch die Mantelseite geleitet wird, der Term "$T_{t-o1}$" die iterative Auslasstemperatur der Flüssigkeit repräsentiert, die durch die Röhrenseite geleitet wird, "$T_{t-i}$" die Einlasstemperatur der Flüssigkeit repräsentiert, die durch die Röhrenseite geleitet wird, "$T_{s-o1}$ die iterative Auslasstemperatur der Flüssigkeit repräsentiert, die durch die Mantelseite geleitet wird, und "$T_{s-i}$" die Einlasstemperatur der Flüssigkeit repräsentiert, die durch die Mantelseite geleitet wird.

3. Verfahren nach Anspruch 2, **dadurch gekennzeichnet, dass** die erwarteten Auslasstemperaturen der Flüssigkeit in dem Schritt der Berechnung der erwarteten Auslasstemperaturen (102) gemäß den folgenden Gleichungen berechnet werden

$$T_{t-oold} = T_{t-o1}$$

$$T_{s-oold} = T_{so-1}$$

wobei der Term "$T_{t-oold}$" die erwartete Auslasstemperatur der Flüssigkeit repräsentiert, die durch die Röhrenseite geleitet wird, und "$T_{s-oold}$" die erwartete Auslasstemperatur der Flüssigkeit repräsentiert, die durch die Mantelseite geleitet wird.

4. Verfahren nach Anspruch 3, **dadurch gekennzeichnet, dass** die mittleren Temperaturen der Flüssigkeiten in dem Schritt des Auffindens der mittleren Flüssigkeitstemperaturen (103) gemäß den folgenden Gleichungen berechnet werden

$$T_{ave-t} = \frac{T_{t-o1} + T_{t-i}}{2}$$

$$T_{ave-s} = \frac{T_{s-o1} + T_{s-i}}{2}$$

wobei der Term "$T_{ave-t}$" die mittlere Temperatur der Flüssigkeit repräsentiert, die durch die Röhrenseite geleitet wird, und "$T_{ave-s}$" die mittlere Temperatur der Flüssigkeit repräsentiert, die durch die Mantelseite geleitet wird.

5.  Verfahren nach Anspruch 4, **dadurch gekennzeichnet, dass** der iterative saubere Wärmeübergangskoeffizient des Wärmetauschers (E) in dem Schritt der Berechnung des iterativen sauberen Wärmeübergangskoeffizienten des Wärmetauschers (E) (104) gemäß der folgenden Gleichung berechnet wird

$$U_{est} = \left[ \frac{OD_t}{ID_t \times h_i} + \frac{OD_t \times \ln\left(OD_t / ID_t\right)}{2 \times k_{tube}} + \frac{1}{h_o} \right]^{-1}$$

wobei der Term "$U_{est}$" den iterativen sauberen Wärmeübergangskoeffizienten des Wärmetauschers (E) repräsentiert, "$OD_t$" den Außendurchmesser der Röhre (T) repräsentiert, "$ID_t$" den Innendurchmesser der Röhre (T) repräsentiert, "$h_i$" den Wärmeübergangskoeffizienten der Röhre (T) repräsentiert, "$k_{tube}$" die thermische Leitfähigkeit der Röhre (T) repräsentiert und der Term "$h_o$" den Wärmeübergangskoeffizienten des Mantels (S) repräsentiert.

6.  Verfahren nach Anspruch 3 oder 5, **dadurch gekennzeichnet, dass** die logarithmische mittlere Temperaturdifferenz in dem Schritt der Berechnung der logarithmischen mittleren Temperaturdifferenz (105) gemäß der folgenden Gleichung berechnet wird

$$LMTD = \frac{\left[\left(T_{s-i} - T_{t-o1}\right) - \left(T_{s-o1} - T_{t-i}\right)\right]}{\ln\left(\dfrac{T_{s-i} - T_{t-o1}}{T_{s-o1} - T_{t-i}}\right)}$$

wobei der Term "LMTD" die logarithmische mittlere Temperaturdifferenz repräsentiert.

7.  Verfahren nach Anspruch 6, **dadurch gekennzeichnet, dass** die iterativen Auslasstemperaturen der Flüssigkeiten in dem Schritt der Aktualisierung der iterativen Auslasstemperaturen (106) gemäß den folgenden Gleichungen berechnet werden

$$Q = \dot{m}_t \times cp_t \times \left(T_{t-o1} - T_{t-i}\right)$$

$$Q = m_s \times cp_s \times \left(T_{s-o1} - T_{s-i}\right)$$

$$Q = F \times U_{EST} \times A \times LMTD$$

wobei der Term "Q" die übertragene Wärme repräsentiert, "$m_t$" die Masse der durch die Röhrenseite geleiteten Flüssigkeit repräsentiert, "$cp_t$" die spezifische Wärme der durch die Röhrenseite geleiteten Flüssigkeit repräsentiert, "$m_s$" die Masse der durch die Mantelseite geleiteten Flüssigkeit repräsentiert, "$cp_s$" die spezifische Wärme der durch die Mantelseite geleiteten Flüssigkeit repräsentiert, F den Korrekturfaktor bei Berechnung der logarithmischen Temperaturdifferenz repräsentiert und "A" die Oberflächenfläche des Wärmetauschers ist.

8. Verfahren nach Anspruch 7, **dadurch gekennzeichnet, dass** die folgenden Aussagen in dem Schritt des Vergleichens der aktualisierten iterativen Auslasstemperaturwerte mit den erwarteten Auslasstemperaturwerten (107) verwendet werden

$$abs(T_{s-o1} - T_{s-oold}) \gg TH_1$$

$$abs(T_{t-o1} - T_{t-oold}) \gg TH_2$$

wobei die Terme "TH$_1$" und "TH$_2$" jeweils vordefinierte Schwellenwerte sind.

9. Verfahren nach Anspruch 8, **dadurch gekennzeichnet, dass**, wenn wenigstens eine der Aussagen erfüllt ist, zu dem Schritt der Bestimmung einer erwarteten Auslasstemperatur für jede Flüssigkeit (102) zurückgekehrt wird.

10. Verfahren nach Anspruch 8, **dadurch gekennzeichnet, dass**, wenn keine der Aussagen erfüllt ist, die Momentanwerte des Wärmetauschers (E) gemäß den folgenden Gleichungen berechnet werden

$$U_C = U_{est}$$

$$LMTD_{op} = \frac{\lfloor(T_{s-i} - T_{t-op}) - (T_{s-op} - T_{t-i})\rfloor}{\ln\left(\dfrac{T_{s-i} - T_{t-op}}{T_{s-op} - T_{t-i}}\right)}$$

$$Q = \dot{m}_t \times cp_t \times (T_{t-op} - T_{t-i}) = U_d \times A \times LMTD_{op}$$

wobei der Term "U$_c$" den Wärmeübergangskoeffizienten des Wärmetauschers (E) unter sauberen Bedingungen repräsentiert, "LMTD$_{op}$" die momentane logarithmische mittlere Temperaturdifferenz des Wärmetauschers (E) repräsentiert, "T$_{t-op}$" die momentane Auslasstemperatur der Flüssigkeit repräsentiert, die durch die Röhrenseite geleitet wird, "T$_{s-op}$" die momentane Auslasstemperatur der Flüssigkeit repräsentiert, die durch die Mantelseite geleitet wird, "$\dot{m}_t$" die Massengeschwindigkeit der durch die Röhrenseite geleiteten Flüssigkeit repräsentiert und "U$_d$" den Wärmeübergangskoeffizienten des Wärmetauschers (E) unter verschmutzten Bedingungen repräsentiert.

11. Verfahren nach Anspruch 10, **dadurch gekennzeichnet, dass** das momentane Ausmaß der Verschmutzung des Wärmetauschers (E) in dem Schritt der Berechnung des Ausmaßes der Verschmutzung des Wärmetauschers (E) (109) gemäß der folgenden Gleichung berechnet wird

$$R_f = \frac{1}{U_C} - \frac{1}{U_d}$$

wobei der Term "R$_f$" den Verschmutzungskoeffizienten des Wärmetauschers repräsentiert.

12. Verfahren nach einem der vorhergehenden Ansprüche, **dadurch gekennzeichnet, dass** der Verschmutzungskoeffizient des Wärmetauschers (E) in bestimmten Zeitintervallen berechnet wird.

13. Verfahren nach Anspruch 12, **dadurch gekennzeichnet, dass** es den Schritt aufweist, das zeitabhängige Verschmutzungsverhalten des Wärmetauschers (E) zu überwachen, indem die Verschmutzungskoeffizienten des Wärmetauschers (E) zu verschiedenen Zeiten berechnet werden.

14. Verfahren nach Anspruch 1, **dadurch gekennzeichnet, dass** die Temperaturdifferenzen in dem Schritt der Zuordnung der Differenz der Einlass- und Auslasstemperatur für die Flüssigkeiten (100) als ein konstanter Wert zugeordnet werden.

**15.** Verfahren nach Anspruch 1, **dadurch gekennzeichnet, dass** die Temperaturdifferenzen in dem Schritt der Zuordnung von Differenzen der Einlass- und Auslasstemperaturdifferenzen für die Flüssigkeiten (100) gemäß den Einlasstemperaturen der Flüssigkeiten zugeordnet werden.

**16.** Verfahren nach Anspruch 8, **dadurch gekennzeichnet, dass** die Schwellenwerte in Form von konstanten Werten zugeordnet werden.

## Revendications

**1.** Procédé pour modéliser la quantité d'encrassement dans un échangeur de chaleur (E) comprenant au moins une enveloppe (S) et au moins un tube (T) disposé dans ladite enveloppe (S) pour fournir un échange thermique entre les fluides à différentes températures passant respectivement à travers ladite enveloppe (S) et ledit tube (T), **caractérisé en ce qu'**il comprend les étapes suivantes :

- l'attribution d'une différence de température d'entrée et de sortie pour chacun des fluides passant à travers l'enveloppe (S) et le tube (T) (100) ;
- le calcul d'une température de sortie itérative pour chaque fluide en utilisant les différences de température attribuées et les températures d'entrée mesurées des fluides (101);
- la détermination d'une température de sortie prévue pour chaque fluide de manière à la faire équivaloir à la température de sortie itérative calculée (102) ;
- le calcul d'une valeur de température moyenne pour chaque fluide (103) ;
- le calcul d'un coefficient de transfert de chaleur propre itératif pour l'échangeur de chaleur (E) en utilisant les propriétés physiques aux températures moyennes calculées du tube (T) et de l'enveloppe (S) (104) ;
- le calcul d'une différence de température moyenne logarithmique en utilisant les températures d'entrée et les températures de sortie itératives des fluides (105) ;
- l'actualisation des températures de sortie itératives pour chaque fluide en résolvant certaines équations énergétiques du tube (T), de l'enveloppe (S) et de l'échangeur de chaleur (E) en utilisant le coefficient de transfert de chaleur propre itératif calculé, la différence de température moyenne logarithmique calculée, les paramètres physiques de l'échangeur de chaleur (E), les paramètres physiques du tube (T) et de l'enveloppe (S) et les températures d'entrée des fluides (106) ;
- la comparaison des températures de sortie itératives actualisées aux températures de sortie prévues (107) ;
- le retour à l'étape de détermination d'une température de sortie prévue pour chaque fluide (102) si la différence entre la température de sortie itérative actualisée et la température de sortie prévue pour au moins un des fluides est au-dessus d'une valeur prédéfinie ;
- le calcul de valeurs instantanées pour l'échangeur de chaleur (E) en utilisant les températures de sortie itératives actualisées si la différence entre la température de sortie itérative actualisée et la température de sortie prévue pour chaque fluide est au-dessous de ladite valeur de seuil prédéfinie (108) ; et
- le calcul de la quantité d'encrassement dans l'échangeur de chaleur (E) en utilisant les valeurs instantanées calculées et le coefficient de transfert de chaleur propre itératif calculé (109).

**2.** Procédé selon la revendication 1, **caractérisé en ce que** les températures de sortie itératives des fluides sont calculées dans l'étape de calcul de la température de sortie itérative (101) selon les équations suivantes,

$$T_{t-o1} = T_{t-i} + delt1$$

$$T_{s-o1} = T_{s-i} - delt2$$

où le terme « delt1 » représente la différence de température attribuée au fluide passant à travers le côté tube, « delt2 » représente la différence de température attribuée au fluide passant à travers le côté enveloppe, le terme « $T_{t-o1}$ » représente la température de sortie itérative du fluide passant à travers le côté tube, « $T_{t-i}$ » représente la température d'entrée du fluide passant à travers le côté tube, « $T_{s-o1}$ » représente la température de sortie itérative du fluide passant à travers le côté enveloppe, et « $T_{s-i}$ » représente la température d'entrée du fluide passant à travers le côté enveloppe.

3. Procédé selon la revendication 2, **caractérisé en ce que** les températures de sortie prévues des fluides sont calculées dans l'étape de détermination de la température de sortie prévue (102) selon les équations suivantes,

$$T_{t\text{-}oold} = T_{t\text{-}o1}$$

$$T_{s\text{-}oold} = T_{so\text{-}1}$$

où le terme « $T_{t\text{-}oold}$ » représente la température de sortie prévue du fluide passant à travers le côté tube et « $T_{s\text{-}oold}$ » représente la température de sortie prévue du fluide passant à travers le côté enveloppe.

4. Procédé selon la revendication 3, **caractérisé en ce que** les températures moyennes des fluides sont calculées dans l'étape de recherche des températures de fluide moyennes (103) selon les équations suivantes,

$$T_{ave-t} = \frac{T_{t-o1} + T_{t-i}}{2}$$

$$T_{ave-s} = \frac{T_{s-o1} + T_{s-i}}{2}$$

où le terme « $T_{ave\text{-}t}$ » représente la température moyenne du fluide passant à travers le côté tube et « $T_{ave\text{-}s}$ » représente la température moyenne du fluide passant à travers le côté enveloppe.

5. Procédé selon la revendication 4, **caractérisé en ce que** le coefficient de transfert de chaleur propre itératif pour l'échangeur de chaleur (E) est calculé dans l'étape de calcul du coefficient de transfert de chaleur propre itératif pour l'échangeur de chaleur (E) (104) selon l'équation suivante,

$$U_{est} = \left[ \frac{OD_t}{ID_t \times h_i} + \frac{OD_t \times ln\left( {OD_t}/{ID_t} \right)}{2 \times k_{tube}} + \frac{1}{h_o} \right]^{-1}$$

où le terme « $U_{est}$ » représente le coefficient de transfert de chaleur propre itératif de l'échangeur de chaleur (E), « $OD_t$ » représente le diamètre extérieur du tube (T), « $ID_t$ » représente le diamètre intérieur du tube (T), « $h_i$ » représente le coefficient de transfert de chaleur du tube (T), « $k_{tube}$ » représente la conductivité thermique du tube (T) et le terme « $h_o$ » représente le coefficient de transfert de chaleur de l'enveloppe (S).

6. Procédé selon la revendication 3 ou 5, **caractérisé en ce que** la différence de température moyenne logarithmique est calculée dans l'étape de calcul de la différence de température moyenne logarithmique (105) selon l'équation suivante,

$$LMTD = \frac{\left[ \left( T_{s-i} - T_{t-o1} \right) - \left( T_{s-o1} - T_{t-i} \right) \right]}{ln\left( \frac{T_{s-i} - T_{t-o1}}{T_{s-o1} - T_{t-i}} \right)}$$

où le terme « LMTD » représente la différence de température moyenne logarithmique.

7. Procédé selon la revendication 6, **caractérisé en ce que** les températures de sortie itératives des fluides sont calculés dans l'étape d'actualisation de la température de sortie itérative (106) selon les équations suivantes,

$$Q = \dot{m}_t \times cp_t \times \left(T_{t-o1} - T_{t-i}\right)$$

$$Q = m_s \times cp_s \times \left(T_{s-o1} - T_{s-i}\right)$$

$$Q = F \times U_{EST} \times A \times LMTD$$

où le terme « Q » représente la chaleur transférée, « $m_t$ » représente la masse du fluide passant à travers le côté tube, « $cp_t$ » représente la chaleur spécifique du fluide passant à travers le côté tube, « $m_s$ » représente la masse du fluide passant à travers le côté enveloppe, « $cp_s$ » représente la chaleur spécifique du fluide passant à travers le côté enveloppe, F représente le facteur de correction dans le calcul de la différence de température logarithmique et « A » est la surface totale de l'échangeur de chaleur.

8. Procédé selon la revendication 7, **caractérisé en ce que** les expressions suivantes sont utilisées dans l'étape de comparaison des valeurs de températures de sortie itératives actualisées aux valeurs de température de sortie prévues (107),

$$abs\left(T_{s-o1} - T_{s-oold}\right) \rangle TH_1$$

$$abs\left(T_{t-o1} - T_{t-oold}\right) \rangle TH_2$$

où les termes « $TH_1$ » et « $TH_2$ » sont des valeurs de seuil prédéfinies, respectivement.

9. Procédé selon la revendication 8, **caractérisé en ce que** si au moins une desdites expressions est satisfaite, il est retourné à l'étape de détermination d'une température de sortie prévue pour chaque fluide (102).

10. Procédé selon la revendication 8, **caractérisé en ce que** si aucune desdites expressions n'est satisfaite, les valeurs instantanées de l'échangeur de chaleur (E) sont calculées selon les équations suivantes,

$$U_C = U_{est}$$

$$LMTD_{op} = \frac{\left[\left(T_{s-i} - T_{t-op}\right) - \left(T_{s-op} - T_{t-i}\right)\right]}{\ln\left(\dfrac{T_{s-i} - T_{t-op}}{T_{s-op} - T_{t-i}}\right)}$$

$$Q = \dot{m}_t \times cp_t \times \left(T_{t-op} - T_{t-i}\right) = U_d \times A \times LMTD_{op}$$

où le terme « $U_c$ » représente le coefficient de transfert de chaleur de l'échangeur de chaleur (E) dans des conditions propres, « $LMTD_{op}$ » représente la différence de température moyenne logarithmique instantanée de l'échangeur de chaleur (E), « $T_{t-op}$ » représente la température de sortie instantanée du fluide passant à travers le côté tube, « $T_{s-o}p$ » représente la température de sortie instantanée du fluide passant à travers le côté enveloppe, « $\dot{m}_t$ » représente la vitesse massique du fluide passant à travers le côté tube et « $U_d$ » représente le coefficient de transfert de chaleur de l'échangeur de chaleur (E) dans des conditions d'encrassement.

11. Procédé selon la revendication 10, **caractérisé en ce que** la quantité instantanée d'encrassement de l'échangeur de chaleur (E) est calculée dans l'étape de calcul de la quantité d'encrassement dans l'échangeur de chaleur (E) (109) selon l'équation suivante,

$$R_f = \left.1\right/U_c - \left.1\right/U_d$$

où le terme « $R_f$ » représente le coefficient d'encrassement de l'échangeur de chaleur.

**12.** Procédé selon l'une quelconque des revendications précédentes, **caractérisé en ce que** le coefficient d'encrassement de l'échangeur de chaleur (E) est calculé dans certains intervalles de temps.

**13.** Procédé selon la revendication 12, **caractérisé en ce qu'**il comprend une étape de surveillance du comportement d'encrassement en fonction du temps de l'échangeur de chaleur (E) en comparant les coefficients d'encrassement de l'échangeur de chaleur (E) calculés à différents instants.

**14.** Procédé selon la revendication 1, **caractérisé en ce que** les différences de température sont attribuées comme une valeur constante dans l'étape d'attribution des différences de température d'entrée et de sortie pour les fluides (100).

**15.** Procédé selon la revendication 1, **caractérisé en ce que** les différences de température sont attribuées en fonction des températures d'entrée des fluides dans l'étape d'attribution des différences de température d'entrée et de sortie pour les fluides (100).

**16.** Procédé selon la revendication 8, **caractérisé en ce que** lesdites valeurs de seuil sont attribuées sous la forme de valeurs constantes.

E

S

T

Figure – 1

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008094757 A1
- CA 2344908